# EUROPEAN PATENT SPECIFICATION

(11) **EP 1 147 706 B1**
(45) Date of publication and mention of the grant of the patent: **29.06.2005**
(21) Application number: 01500090.4
(22) Date of filing: 03.04.2001
(51) Int. Cl.: A01N 61/00, A01N 57/36, A01N 43/90, A01N 43/16, A01N 37/06, A01N 33/10

(54) **Growth stimulating composition for plants**
Zusammensetzung zur Stimulierung des Pflanzenwuchs
Composition pour stimuler la croissance des plantes

(30) Priority: 13.04.2000 ES 200000968
(43) Date of publication of application: 24.10.2001
(73) Proprietor: Inabonos, S.A., 31160 Orcoyen, Navarra (ES)
(72) Inventor: Garcia-Mina Freire, Jose Maria, 31170 Iza (Navarra) (ES); Cenoz Imaz, Santiago, 31180 Cizur Mayor (Navarra) (ES)
(74) Representative: Del Santo Abril, Natividad

(56) References cited:
- WO-A-85/05008
- US-A- 4 050 919
- US-A- 4 209 316
- US-A- 4 678 775
- US-A- 5 817 600
- ICHIKAWA TAKANARI ET AL: "Identification and role of adenylyl cyclase in auxin signalling in higher plants." NATURE (LONDON), vol. 390, no. 6661, 18 December 1997 (1997-12-18), pages 698-701, XP002176137 ISSN: 0028-0836
- DATABASE WPI Section Ch, Week 199744 Derwent Publications Ltd., London, GB; Class C03, AN 1997-478278 XP002176141 & RU 2 076 598 C (AGAFONOV YU V), 10 April 1997 (1997-04-10)
- DATABASE WPI Section Ch, Week 198039 Derwent Publications Ltd., London, GB; Class A97, AN 1980-68568C XP002176142 & JP 55 104991 A (KIKKO SHOKUHIN KOGY), 11 August 1980 (1980-08-11)
- DATABASE WPI Section Ch, Week 199415 Derwent Publications Ltd., London, GB; Class C04, AN 1994-125396 XP002176143 & SU 1 791 438 A (AS UZB CHEM INST), 30 January 1993 (1993-01-30)
- DATABASE BIOSIS [Online] BIOSCIENCES INFORMATION SERVICE, PHILADELPHIA, PA, US; 1990 ISHIOKA N ET AL: "INVOLVEMENT OF CYCLIC AMP IN ADVENTITIOUS BUD INITIATION OF TORENIA STEM SEGMENTS" Database accession no. PREV199089087051 XP002176138 & PLANT AND CELL PHYSIOLOGY, vol. 31, no. 1, 1990, pages 91-98, ISSN: 0032-0781
- DATABASE BIOSIS [Online] BIOSCIENCES INFORMATION SERVICE, PHILADELPHIA, PA, US; February 1998 (1998-02) MARINANGELI PABLO ET AL: "Influence of DB-cAMP, adenosine, forskolin, and traumatic acid on in vitro bulbing of Lilium longiflorum." Database accession no. PREV199800136147 XP002176139 & HORTSCIENCE, vol. 33, no. 1, February 1998 (1998-02), pages 151-152, ISSN: 0018-5345
- DATABASE BIOSIS [Online] BIOSCIENCES INFORMATION SERVICE, PHILADELPHIA, PA, US; 1997 VITORIA A P ET AL: "Cytokinin-like effects of caffeine in bioassays." Database accession no. PREV199800186237 XP002176140 & BIOLOGIA PLANTARUM (PRAGUE), vol. 40, no. 3, 1997, pages 329-335, ISSN: 0006-3134

## Description

The present invention refers to a product with the capacity to increase the intra-cellular levels of cyclic AMP as stimulants of plant growth and development in normal conditions and in conditions of stress (osmotic, hydric, thermic, mechanical or pathogenic attack). It can be applied to any species of plant and at any point in its life cycle.

Although the intervention of cyclic AMP (3'-5' - adenosine cyclic monophosphate) is well-known as an intra-cellular regulator of a great number of biochemical processes in animals (Khan y Lands, 1973. Prostaglandins and cyclic AMP. Academic Press), the role that this compound may represent in the regulation of biochemical processes in plant cells is far from being well-known and even its existence in this medium is disputed (Newton, R., and col., Cyclic nucleotides in higher plants: the enduring paradox. New Phytol., 143, 427-455., 1999).

The effect of the intra-cellular levels of cyclic AMP on the growth of plants in stress conditions and normal conditions has been investigated. The stress states include osmotic or saline stress, hydric stress, thermic stress, mechanical stress and stress caused by the attack of exterior agents (pathogenic agents like, for example, fungi, bacterias, insects, viruses, etc).

At this present time, some patent documents are known which describe the use of nucleotides to improve germination and primary development of seedlings.

In this way, in document US 4,209,316 (McDaniel and Brooks; 1978), it is not specified if they are cyclic nucleotides and furthermore the use of stimulants is not contemplated in the intra-cellular content of cyclic AMP but in the nucleotides themselves. Moreover, neither do they refer to adult plants in production but to seedlings in their primary states.

Document US 4,050,919 (Motomura, Y and Ishiyama, J. 1975) refers to the direct application of cyclic AMP and not products which act on the intra-cellular content of cyclic AMP.

The same applies to other known patent documents, like for example document JP63279722A (Tanimoto Kiyoshi, Takahashi Shigeru; 1987) where it describes the application of cyclic AMP in culture media for the development of seedlings in vitro. Nevertheless, the application of cyclic AMP directly presents major problems due to the reduced capacity of this molecule to penetrate through the biological membranes (Khan and Lands, 1973. Prostaglandins and cyclic AMP. Academic Press), making its effectiveness (in animal models too) very low.

WO 85 05008 disclose a mixture comprising: (A) theophylline and caffeine as phosphodiesterase inhibitors enzyme (PDE) and (B) a second compound having pest-controlling activity, selected from the group consisting of (1) a substantial octopamine agonist toward an octopamine receptor such as isoproterol, epinephrine and nonrepinephrine and (2) a compound stimulating the enzyme an adenylate cyclase such as forskolin and (3) a cyclic adenosine monophosphate (cAMP) analogue.

One objective of the present invention is to have a compound to stimulate the growth of plants which can be used in any type of plant and at any point in its life cycle.

Another objective of the present invention is to have a compound to stimulate plant growth which is effective both in normal conditions and in stress situations (osmotic, hydric, thermic, mechanical or pathogenic attack).

The invention basically consists of using a precursor compound of **cyclic AMP,** or an inhibitor compound of the enzymes of the **phosphodiesterases** family, or a stimulator compound of the enzymes of the **Adenyl- Cyclase,** or an agonist compound of the β-**adrenergic** receptors to which arachidonic acid or a prostaglandin is added.

The advantages which the product object of the invention presents with respect to the state of the technique lie in:
- Its composition, since compounds are used (different from cyclic AMP) with the capacity to increase the intra-cellular content of cyclic AMP in different species of plants, thus stimulating its plant development. None of the products specified have been previously described for this use in plants.
- Its use, since the product object of the invention is prepared for the treatment of adult plants in production. The known patent documents only refer to culture media in relation to the production of plants in vitro, seed germination or primary development of seedlings.
- The conditions of use, since the product object of the invention is active on adult plants both under normal conditions, **and under stress conditions** (saline, osmotic, hydric, mechanical or caused by pathogen agents).

A preferred embodiment of the composition object of the invention comprises one or several of the following components;

A precursor compound of cyclic AMP for its transformation to the latter in the interior of the cells, such as the by-product Dibutiril-cyclic AMP. The optimum dosage interval is between 0.1 and 2 ppm, via radicular or foliar.

A compound with the capacity of inhibiting the activity of the enzymes of the **phosphodiesterases** family, such as theophylline, theobromine or caffeine. The optimum dosage interval is between 0.5 and 10 ppm, via radicular or foliar.

A compound with the capacity to stimulate the activity of the enzymes of the **Adenyl-Cyclase,** such as forskolin. The optimum dosage interval is between 0.1 and 2 ppm, via radicular or foliar.

An agonist compound of the **β-adrenergic** receptors such as isoproterenol, epinephrine (adrenaline) or norepinephrine (noradrenaline). The optimum dosage interval is between 1 and 100 ppm, via radicular or foliar.

A chosen compound between arachidonic acid or a prostaglandin. The optimum dosage interval is between 0.25 and 100 ppm, via radicular or foliar.

As for the applicability of the composition object of the invention it can be brought into practice at great liberty.

The composition object of the invention can be applied in solid form, liquid form or suspension.

The composition object of the invention can be applied to any species of plant and at any point in its life cycle. The optimum time of application is:
- Via foliar or radicular in annual plants (cereal, horticultural, ...) : commence treatment on transplant or with 3-4 green leaves.
- In woody perennials commence treatment after budding, and before flowering.

The composition object of the invention can be applied by via radicular or foliar. The optimum dosage interval is between 5 and 10 litres or kilos per hectare. When applied in solution, the optimum dilution is 0.5%.

The composition object of the invention can be presented mixed with mineral fertilizers (such as amonic nitrate, monopotassium phosphate, etc.), with phytoregulators (such as cytoquinines, auxines, giberelines, polyamines, n-ethanolamines, sugars ...) or any type of phytosanitary product (such as fungicides, herbicides, etc.). The proportion of each compound in the mixture can vary between:
1-25% for fertilizers
0.5-5% phytoregulators
1-20% phytosanitaries.

The composition object of the invention can be formulated with tensoactive agents, such as Tween 80 etc., moistening agents etc. The proportions of the mixture of each compound can vary between:
0.1%-10% tensoactive.
1-10% moistening agents.

### EXAMPLE

Composition for 1 kg of product:
1. 0.5 g of Forskolin
2. 1 g of caffeine
3. 0.2 g of 6-Bencilaminopurina
4. 200 g of dipotassium phosphate
5. 45 g of urea
6. 753.3 g of water

Order of making:
Continuous stirring and environment temperature (20-25°C)
   1. (6)+(4)+(5). Stirring until completely dissolved.
   2. 1.+(1)+(2)+(3).

Effect of different compounds on the development of vine plants affected by an attack of mildew (plamopara viticola).

A random block assay was carried out with four repetitions per treatment including 10 vines per repetition.

The disease caused by the plamopara viticola fungus was evaluated both in the expression of frequency (number of leaves affected) and of intensity (percentage of leaf surface affected).

The products applied were:
- Treatment A: A by-product of phosphorous acid + a contact fungicide (folpet) (4kg/hectare) (reference treatment).
- Treatment B: A by-product of phosphorous acid (2.35 l/hectare).
- Treatment C: A by-product of phosphorous acid (3.25 l/hectare) + Patent product according to example of making (2 l/hectare).
- Control which received no treatment.

The results were the following

| **Degree of disease on leaves** | | |
|---|---|---|
| **Treatment** | **Frequency (%) (%reduction)** | **Intensity(%) (%reduction)** |
| Control | 12.27 a (-) | 53 a (-) |
| A | 0.5 b (96) | 4.8 b (91) |
| B | 4.7 c (62) | 25.8 c (51) |
| C | 1.85 b (85) | 11.8 b (78) |

As can be observed, the application of the product object of the patent with the capacity to increase the intra-cellular levels of cyclic AMP (product C) strengthens the action of the product of synthesis (by-product of phosphorous acid) to 23% in relation to frequency and to 27% in relation to intensity referring to the absolute value of the % of reduction.

## Claims

1. A method for stimulating plant growth which comprises applying on a plant a plant growth stimulating composition comprising a compound with the capacity to inhibit the activity of the enzymes of the phosphodiesterases family and a compound with the capacity to stimulate the activity of the enzymes of the adenyl-cyclase family.

2. Method according to claim 1, wherein said compound with the capacity to inhibit the activity of the enzymes of the phosphodiesterases family is theophylline, theobromine caffeine.

3. Method according to claim 1, wherein said compound with the capacity to stimulate the activity of the enzymes of the adenyl-cyclase family is forskolin.

4. Method according to claim 1, wherein said plant growth stimulating composition further comprises a compound selected from the group consisting of a precursor compound of cyclic AMP for its transformation in the latter compound in the interior of the cells; an agonist compound of the β-adrenergic receptors; a compound selected from arachidonic acid or a prostaglandin; and mixtures thereof.

5. Method according to claim 4, wherein said precursor compound of cyclic AMP is dibutyryl-cyclic AMP.

6. Method according to claim 4, wherein said agonist compound of the β-adrenergic receptors is isoproterenol, epinephrine (adrenaline) or norepinephrine (noradrenaline).

7. Method according to claim 1, wherein said plant growth stimulating composition further comprises a mineral fertilizer.

8. Method according to claim 7, wherein said mineral fertilizer is ammonium nitrate or potassium phosphate.

9. Method according to claim 1, wherein said plant growth stimulating composition further comprises a phytoregulator product.

10. Method according to claim 9, wherein said phytoregulator products is selected from the group consisting of cytoquinines, auxines, giberelines, polyamines, n-ethanolamines or sugars.

11. Method according to claim 1, wherein said plant growth stimulating composition further comprises a phytosanitary product.

12. Method according to claim 11, wherein said phytosanitary product is a fungicide or a herbicide.

13. Method according to claim 1, wherein said plant growth stimulating composition further comprises a tensoactive agent.

14. Method according to claim 13, wherein said tensoactive agent is Tween 80.

15. Method according to claim 1, wherein said plant growth stimulating composition further comprises a moistening agent.

## Patentansprüche

1. Methode zur Förderung des Pflanzenwachstums, welche das Auftragen auf einer Pflanze einer das Pflanzenwachstum fördernden Zusammensetzung umfasst, wobei diese eine Verbindung umfasst, welche fähig ist die Aktivität der Enzyme der Phosphodiesterase-Familie zu hemmen, sowie eine Verbindung, die fähig ist die Aktivität der Enzyme der Adenylcyclase-Familie zu fördern.

2. Methode nach Anspruch 1, wobei die besagte Verbindung, die fähig ist die Aktivität der Enzyme der Phosphodiesterase-Familie zu hemmen Theophyllin, Theobromin, Koffein ist.

3. Methode nach Anspruch 1, wobei die besagte Verbindung, die fähig ist die Aktivität der Enzyme der Adenylcyclase-Familie zu fördern Forskolin ist.

4. Methode nach Anspruch 1, wobei die besagte das Pflanzenwachstum fördernde Zusammensetzung eine Verbindung umfasst, die aus der Gruppe gebildet von einer Vorläuferverbindung von zyklischem AMP zur Umsetzung zum Letztgenannten im Inneren der Zellen; einer Agonist-Verbindung der β-adrenergischen Rezeptoren; einer Verbindung, die aus der Gruppe gebildet von Arachidonsäure oder einem Prostaglandin ausgewählt wird; und Mischungen derselben ausgewählt wird.

5. Methode nach Anspruch 4, wobei die besagte Vorläuferverbindung von zyklischem AMP Dibutyril-zyklisches AMP ist.

6. Methode nach Anspruch 4, wobei die besagte Agonist-Verbindung der β-adrenergischen Rezeptoren Isoproterenol, Epinephrin (Adrenalin) oder Norepinephrin (Noradrenalin) ist.

7. Methode nach Anspruch 1, wobei die besagte das Pflanzenwachstum fördernde Zusammensetzung zudem einen Mineraldünger umfasst.

8. Methode nach Anspruch 7, wobei der besagte Mineraldünger Ammoniumnitrat oder Kaliumphosphat ist.

9. Methode nach Anspruch 1, wobei die besagte das Pflanzenwachstum fördernde Zusammensetzung zudem ein Phytoregulatoren-Produkt umfasst.

10. Methode nach Anspruch 9, wobei das besagte Phytoregulatoren-Produkt aus der Gruppe gebildet von Cytokininen, Auxinen, Giberillinen, Polyaminen, n-Ethanolaminen oder Zuckern ausgewählt wird.

11. Methode nach Anspruch 1, wobei die besagte das Pflanzenwachstum fördernde Zusammensetzung zudem ein Pflanzenschutzprodukt umfasst.

12. Methode nach Anspruch 11, wobei das besagte Pflanzenschutzprodukt ein Fungizid oder ein Herbizid ist.

13. Methode nach Anspruch 1, wobei die besagte das Pflanzenwachstum fördernde Zusammensetzung zudem ein Tensid umfasst.

14. Methode nach Anspruch 13, wobei das besagte Tensid Tween 80 ist.

15. Methode nach Anspruch 1, wobei die besagte das Pflanzenwachstum fördernde Zusammensetzung zudem ein Netzmittel umfasst.

## Revendications

1. Méthode pour stimuler la croissance de plantes comprenant l'application sur une plante d'une composition stimulante de la croissance de plantes comprenant un composé capable d'inhiber l'activité des enzymes de la famille des phosphodiestérases et un composé capable de stimuler l'activité des enzymes de la famille des adénylcyclases.

2. Méthode selon la revendication 1, dans laquelle ledit composé capable d'inhiber l'activité des enzymes de la famille des phosphodiestérases est de la théophylline, de la théobromine, de la caféine.

3. Méthode selon la revendication 1, dans laquelle ledit composé capable de stimuler l'activité des enzymes de la famille des adénylcyclases es de la forskoline.

4. Méthode selon la revendication 1, dans laquelle ladite composition stimulante de la croissance de plantes comprend en outre un composé choisi parmi le groupe consistant d'un composé précurseur de l'AMP cyclique pour sa transformation en ce dernier composé à l'intérieur des cellules ; d'un composé agoniste des récepteurs adrénergiques bêta ; d'un composé choisi parmi l'acide arachidonique ou une prostaglandine ; et des mélanges de ceux-ci.

5. Méthode selon la revendication 4, dans laquelle ledit composé précurseur de l'AMP cyclique est le dibutyryl AMP cyclique.

6. Méthode selon la revendication 4, dans laquelle ledit composé agoniste des récepteurs adrénergiques bêta es l'isoproterenol, l'épinéphrine (adrénaline) ou la norépinéphrine (noradrénaline).

7. Méthode selon la revendication 1, dans laquelle ladite composition stimulante de la croissance de plantes comprend en outre un fertilisant minéral.

8. Méthode selon la revendication 7, dans laquelle ledit fertilisant minéral est du nitrate d'ammonium ou du phosphate de potassium.

9. Méthode selon la revendication 1, dans laquelle ladite composition stimulante de la croissance de plantes comprend en outre un produit phytorégulateur.

10. Méthode selon la revendication 9, dans laquelle ledit produit phytorégulateur est choisi parmi le groupe consistant en cytoquinines, auxines, gibbérellines, polyamines, n-éthanolamines ou sucres.

11. Méthode selon la revendication 1, dans laquelle ladite composition stimulante de la croissance de plantes comprend en outre un produit phytosanitaire.

12. Méthode selon la revendication 11, dans laquelle ledit produit phytosanitaire est un fongicide ou un herbicide.

13. Méthode selon la revendication 1, dans laquelle ladite composition stimulante de la croissance de plantes comprend en outre un agent tensioactif.

14. Méthode selon la revendication 13, dans laquelle ledit agent tensioactif est du Tween 80.

15. Méthode selon la revendication 1, dans laquelle ladite composition stimulante de la croissance de plantes comprend en outre un agent mouillant.
